(19) Europäisches Patentamt
European Patent Office
Office européen des brevets

(11) Publication number: **0 137 230**
A2

(12) # EUROPEAN PATENT APPLICATION

(21) Application number: **84109709.0**

(22) Date of filing: **16.08.84**

(51) Int. Cl.[4]: **C 08 L 69/00**
C 08 L 67/02

(30) Priority: **30.08.83 US 527861**

(43) Date of publication of application:
**17.04.85 Bulletin 85/16**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Belfoure, Edward Louis**
**R.R. No. 1, Box 37**
**New Harmony Indiana 47631(US)**

(74) Representative: **Catherine, Alain**
**General Electric Frauenstrasse 32**
**D-8000 München 5(DE)**

(54) **Thermoplastic molding compositions.**

(57) Thermoplastic molding compositions exhibiting improved processability and resistance to stress cracking comprised of, in physical admixture, at least one copolyestercarbonate resin and at least one polyalkylene terephthalate in an amount effective to improve the processability and stress cracking resistance of said compositions.

EP 0 137 230 A2

Croydon Printing Company Ltd.

# THERMOPLASTIC MOLDING COMPOSITIONS

## BACKGROUND OF THE INVENTION

Copolyestercarbonate resins are well known thermoplastic materials which, due to their many excellent mechanical and physical properties, find use as thermoplastic engineering materials. The copolyestercarbonates exhibit, for example, excellent properties of toughness, flexibility, impact resistance, and relatively high heat distortion temperatures. The copolyestercarbonates may be prepared, inter alia, as described in U.S. Patent 3,169,121 by the coreaction of a dihydric phenol, a carbonate precursor, and a difunctional carboxylic acid or a reactive derivative thereof.

However, due to their relatively high melt viscosities the copolyestercarbonate resins are generally somewhat difficult to process, requiring high processing temperatures. Also, under certain conditions, such as after heat or steam aging, the copolyestercarbonates are prone to stress cracking or crazing. It would therefore be very advantageous if a copolyestercarbonate resin composition were available which retained substantially most of the advantageous properties of copolyestercarbonate resins and was also easier to process and had reduced stress cracking or crazing.

It has now been discovered that if a polyalkylene terephthalate polymer is admixed with the copolyestercarbonate resin the resultant composition exhibits, to a substantial degree, substantially most of the advantageous properties of copolyestercarbonate resins, has improved processability, and has improved stress cracking characteristics.

## SUMMARY OF THE INVENTION

The instant invention is directed to copolyestercarbonate resin molding compositions exhibiting, to a substantial degree, most of the advantageous properties of copolyestercarbonate resins and also exhibiting improved processability and improved resistance to stress cracking. These copolyestercarbonate resin compositions are comprised of, (i) at least one copolyestercarbonate resin, and (ii) at least one polyalkylene terephthalate resin.

## DESCRIPTION OF THE INVENTION

It has been discovered that the addition of a polyalkylene terephthalate to a copolyestercarbonate resin results in an admixture which retains substantially most of the advantageous properties of the copolyestercarbonate resin and simultaneously exhibits improved processability and improved resistance to stress cracking or stress crazing.

The instant compositions are comprised of, in physical admixture, (i) at least one copolyestercarbonate resin, and (ii) at least one polyalkylene terephthalate, preferably poly(ethylene terephthalate).

The copolyestercarbonates of the instant invention are known compounds which are disclosed, inter alia, in U.S. Patent Nos. 3,169,121; 3,030,331; 4,156,069; 4,238,596 and 4,238,597, all of which are hereby incorporated herein by reference.

Briefly stated, the high molecular weight aromatic copolyestercarbonates comprise recurring carbonate groups

$$( -O-\overset{O}{\overset{\|}{C}}-O- )$$

carboxylate groups

$$( - \overset{\overset{\displaystyle O}{\|}}{C} - O - )$$

and aromatic carbocyclic groups in the linear polymer chain, in which at least some of the carbonate groups and at least some of the carboxylate groups are bonded directly to the ring carbon atoms of the aromatic carbocyclic groups.

These copolyestercarbonate polymers contain ester and carbonate bonds in the polymer chain, wherein the amount of the ester bonds is from about 25 to about 90 mole percent, preferably from about 35 to about 85 mole percent, relative to the carbonate bonds. For example, 5 moles of bisphenol A reacting completely with 4 moles of isophthaloyl dichloride and 1 mole of phosgene would give a copolyestercarbonate of 80 mole percent ester bonds.

The copolyestercarbonates are in general prepared by coreacting (i) a difunctional carboxylic acid or a reactive derivative thereof, (ii) a dihydric phenol, and (iii) a carbonate precursor.

The dihydric phenols useful in the preparation of the copolyestercarbonates may be represented by the general formula

$$\text{I.} \qquad HO - \left[\begin{matrix}(Y)_m \\ A\end{matrix}\right]_t \left[\begin{matrix}(R)_p \\ E\end{matrix}\right]_s \left[\begin{matrix}(Y)_m \\ A\end{matrix}\right]_u - OH$$

in which A is an aromatic group such as phenylene, biphenylene, naphthylene, anthrylene, etc. E may be an alkylene or alkylidene radical such as methylene, ethylene, propylene, propylidene, isopropylidene, isobutylene, tertiarybutylene, tertiarybutylidene, butylene, butylidene, isobutylidene, amylene, isoamylene, amylidene, isoamylidene, etc. Where E is an alkylene

or alkylidene group it may also consist of two or more alkylene or alkylidene groups connected by a non-alkylene or non-alkylidene group such as an aromatic linkage, a tertiary amino linkage, an ether linkage, a carbonyl linkage, a silicon-containing linkage, or by a sulfur containing linkage such as a sulfide, sulfoxide, sulfone, etc. In addition E may be a cycloaliphatic group such as cyclopentyl, cyclohexyl, cyclohexylidene, and the like; a sulfur containing linkage such as sulfide, sulfoxide, or sulfone; an ether linkage; a carbonyl group; a tertiary nitrogen group; or a silicon-containing linkage such as silane or siloxy. R is selected from hydrogen or a monovalent hydrocarbon group such as alkyl (methyl, ethyl, propyl, butyl, isopropyl, etc.), aryl (phenyl, naphthyl, etc.), aralkyl (benzyl, ethylphenyl, etc.), alkaryl, and cycloaliphatic (cyclopentyl, cyclohexyl, etc.). Y may be an inorganic atom such as chloride, bromine, fluorine, etc.; an inorganic group such as the nitro group; an organic group such as R above; or an oxy group such as OR, it being only necessary that Y be inert to and unaffected by the reactants and the reaction conditions. The letter m is any whole number from and including zero through the number of positions on A available for substitution; p is any whole number from and including zero through the number of positions on E available for substitution, t is a whole number equal to at least one; s is either zero or one; and u is any whole number including zero.

In the dihydric phenol compound represented by Formula I above, when more than one Y substituent is present they may be the same or different. The same is true for the R substituent. Where s is zero in Formula I and u is not zero, the aromatic rings are directly joined with no intervening alkylene or other bridge.

The positions of the hydroxyl groups and Y on the aromatic nuclear residues can be varied in the ortho, meta, or para positions and the groupings can be in a vicinal, asymmetrical or symmetrical relationship, where two or more ring carbon atoms of the aromatic hydrocarbon residue are substituted with Y and a hydroxyl group.

Examples of dihydric phenol compounds that may be employed in the instant invention, and which are represented by Formula I, include, but are not limited to:

2,2-bis(4-hydroxyphenyl)propane (bisphenol-A);
2,4'-dihydroxydiphenylmethane;
bis(2-hydroxyphenyl)methane;
bis(4-hydroxyphenyl)methane;
bis(4-hydroxy-5-nitrophenyl)methane;
bis(4-hydroxy-2,6-dimethyl-3-methoxyphenyl)methane;
1,1-bis(4-hydroxyphenyl)ethane;
1,2-bis(4-hydroxyphenyl)ethane;
1,1-bis(4-hydroxy-2-chlorophenyl)ethane;
1,1-bis(2,5-dimethyl-4-hydroxyphenyl)ethane;
1,3-bis(3-methyl-4-hydroxyphenyl)propane;
2,2-bis(3-phenyl-4-hydroxyphenyl)propane;
2,2-bis(3-isopropyl-4-hydroxyphenyl)propane;
bis(4-hydroxyphenyl)phenylmethane;
bis(4-hydroxyphenyl)cyclohexane; and the like.

Other useful dihydric phenols are disclosed in U.S. Patent Nos. 3,169,121; 2,288,282; 3,148,172 and 2,739,171, all of which are incorporated herein by reference. Oxygen and sulfur containing groups also can join the two phenols, for example, including oxa, thia, sulfinyl and sulfonyl.

Preferred dihydric phenols, for the purposes of the instant invention, are those wherein E is an alkylene, alkylidene, cycloalkylene or cycloalkylidene

group, A is a phenyl group, s is one, u is one, and t is one.

In general, any difunctional carboxylic acid conventionally used in the preparation of linear polyesters may be utilized in the preparation of the copolyestercarbonates of the present invention. In general, the carboxylic acids which may be used include the aliphatic carboxylic acids, the aliphatic-aromatic carboxylic acids, and the aromatic carboxylic acids. These acids are disclosed, inter alia, in U.S. Patent No. 3,169,121.

The difunctional carboxylic acids which may be utilized in the preparation of the copolyestercarbonate resins generally conform to the formula

$$\text{II.} \quad R^1 - (R^2)_q - COOH$$

wherein $R^2$ is an alkylene, alkylidene, aralkylene, aralkylidene or cycloaliphatic group; an alkylene, alkylidene or cycloaliphatic group containing ethylenic unsaturation; an aromatic group such as phenylene, biphenylene, and the like; two or more aromatic groups connected through non-aromatic linkages such as alkylene or alkylidene groups; and the like. $R^1$ is either a carboxyl or a hydroxyl group. The letter q represents one where $R^1$ is a hydroxyl group and either zero or one where $R^1$ is a carboxyl group.

Preferred difunctional carboxylic acids are the aromatic carboxylic acids, i.e., those acids of Formula II wherein q is one, $R^1$ is a hydroxyl or carboxyl group, and $R^2$ is an aromatic group such as phenylene, naphthylene, substituted phenylene, biphenylene, and the like. The preferred aromatic carboxylic acids are

those represented by the general formula

III. 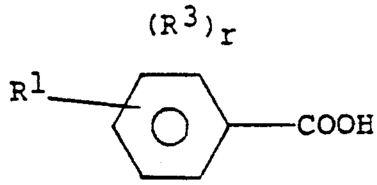

wherein;

$R^1$ is as defined above;

$R^3$ is independently selected from inorganic atoms such as halogens; inorganic groups such as the nitro, amine, amino, and the like; a monovalent organic group such as alkyl, aryl, alkaryl, aralkyl, cycloaliphatic; and a hydrocarbonoxy group such as alkoxy or aryloxy; and

r represents a whole number having a value of from 0 to 4 inclusive.

When more than one $R^3$ substituent is present, i.e., when r is greater than one, they may be the same or different.

Mixtures of these difunctional carboxylic acids may also be employed, and where the term difunctional carboxylic acid is used herein mixtures of two or more different difunctional carboxylic acids as well as individual difunctional carboxylic acids are considered to be included therein.

Preferred aromatic difunctional carboxylic acids are isophthalic acid, terephthalic acid, and mixtures thereof. A particularly useful mixture of isophthalic acid and terephthalic acid is one wherein the weight ratio of isophthalic acid and terephthalic acid is in the range of from about 9.8:0.2 to about 1:10.

Rather than utilizing the difunctional carboxylic acids per se it is possible, and sometimes even preferred, to employ their reactive ester forming derivatives. The preferred reactive derivatives of the difunctional carboxylic acids are the acid halides.

Preferred acid halides are the acid dichlorides. Thus, for example, instead of using isophthalic acid or terephthalic acid it is possible to employ isophthaloyl dichloride or terephthaloyl dichloride.

The carbonate precursor employed in the preparation of the copolyestercarbonates can be a carbonyl halide, a diaryl carbonate, or a bishaloformate. The preferred carbonate precursors are the carbonyl halides. The carbonyl halides include carbonyl chloride, carbonyl bromide, and mixtures thereof. The carbonyl halide is carbonyl chloride, also known as phosgene.

The polyalkylene terephthalate resins which are blended with the copolyestercarbonates to form the compositions of the instant invention may be represented by the general formula

IV. 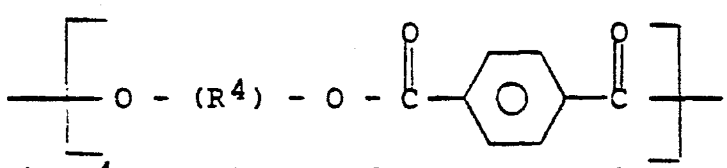

wherein $R^4$ is selected from non-cyclic alkylene radicals. Preferred non-cyclic alkylene radicals are those containing from 2 to about 10 carbon atoms. Some illustrative non-limiting examples of these polyalkylene terephthalates include poly(ethylene terephthalate), poly(propylene terephthalate), poly(butylene terephthalate), poly(isopropylene terephthalate), and poly(pentylene terephthalate). The more preferred polyalkylene terephthalate, from the standpoint of providing molding compositions exhibiting the optimum mix of properties, is poly(ethylene terephthalate).

These polyalkylene terephthalates are well known in the art and are, in general, commercially available or may be readily prepared by known methods. Thus, for

example, one of the methods for preparing polyalkylene terephthalates is the ester interchange method in which the ester of terephthalic acid is reacted with a glycol to form the diglycol ester of the acid or a low molecular weight polymeric polyester which is then polymerized to a high molecular weight polymeric polyester by a condensation reaction with splitting out of the glycol.

The amount of the polyalkylene terephthalate present in the molding compositions of the instant invention is an amount effective to improve the processability of the compositions and to improve the resistance to stress cracking or crazing thereof but insufficient to deleteriously affect, to a substantial degree, most of the advantageous properties of the copolyestercarbonate resin. Generally, this amount is in the range of from about 1 to about 45 weight percent, based on the amount of copolyestercarbonate resin and polyalkylene terephthalate present in the composition. In other words, the instant compositions contain from about 1 to about 45 parts by weight of polyalkylene terephthalate and from about 55 to about 99 parts by weight of the copolyestercarbonate resin. A preferable amount of polyalkylene terephthalate is from about 5 to about 35 weight amd more preferable from about 10 to about 25 weight percent.

Generally, if less than about 1 weight percent of the polyalkylene terephthalate is present in the composition there is no appreciable improvement in either the processability of the composition or in its stress cracking characteristics. If more than about 45 weight percent of the polyalkylene terephthalate is present in the molding composition generally the influence of the polyalkylene terephthalate predominates. In such instances the properties of the composition which are

imparted thereto by the copolyestercarbonate resin are adversely affected.

The method of blending the copolyestercarbonate resin with the polyalkylene terephthalate resin, is not critical and does not constitute part of this invention. One method of preparing the instant blends, for example, comprises blending the two preformed resins in powder or granular form, extruding the blend, chopping into pellets, and re-extruding.

The blends of the instant invention may optionally have admixed therewith the commonly known and used additives such as, for example, antioxidants; antistatic agents; glass fibers; fillers such as mica, talc, clay, and the like; impact modifiers such as those described in U.S. Patent Nos. 4,096,202 and 4,034,013, both of which are incorporated herein by reference; colorants; ultraviolet radiation absorbers such as, for example, the benzophenones, benzotriazoles, cycanoacrylates, and the like; color stabilizers such as the organophosphites disclosed in U.S. Patent Nos. 3,305,520 and 4,118,370, both of which are hereby incorporated herein by reference; hydrolytic stabilizers such as the epoxides disclosed in U.S. Patent Nos. 3,489,716; 4,138,379 and 3,839,247, all of which are incorporated herein by reference; flame retardants; and the like.

Some particularly useful flame retardants are the alkali and alkaline earth metal salts of sulfonic acids. These types of flame retardants are disclosed in U.S. Patent Nos. 3,933,734; 3,931,100; 3,978,024; 3,948,851; 3,926,908; 3,919,167; 3,909,490; 3,953,396; 3,953,399; 3,917,559; 3,951,910 and 3,940,366, all of which are herby incorporated herein by reference.

## DESCRIPTION OF THE PREFERRED EMBODIMENT

The following examples are set forth to further illustrate the present invention and are not to be considered as limiting the invention thereto. Unless otherwise specified, where parts or percents are mentioned, they are parts or percents by weight.

### EXAMPLE 1

This example illustrates the preparation of a copolyestercarbonate resin. This example serves as a control since there is no polyalkylene terephthalate mixed with the copolyestercarbonate resin.

To a reactor fitted with a mechanical agitator are charged 10 liters of deionized water, 16 liters of methylene chloride, 1,910 grams (8.36 moles) of bisphenol-A, 24 milliliters of triethylamine, 3.4 grams of sodium gluconate and 65 grams (0.43 mole) of para-tertiarybutyl phenol. This reaction mixture is stirred and to the stirred reaction mixture are added over a 15 minute period a mixture of 926 grams of terephthaloyl dichloride and 163 grams of isophthaloyl dichloride as a 25 weight % solids solution in methylene chloride. During the acid chloride addition the pH is maintained in the range of 8.5 - 11.5 by the addition of 25% aqueous sodium hydroxide. The resulting mixture is phosgenated by the introduction of phosgene at the rate of 36 grams per minute for 15 minutes with the pH controlled at 9.5 to 12 by the addition of aqueous sodium hydroxide solution. After phosgenation is terminated 6 liters of methylene chloride are added, the brine layer is separated by centrifuge, and the resins solution is washed with aqueous acid and water. The resin is steam precipitated and dried in a nitrogen fluid bed drier at approximately 115°C. This resin product is then fed to an extruder operating at a temperature of about 299°C., to extrude the resin into strands and the strands are

chopped into pellets. The pellets are then injection molded at about 326-343°C. into test samples measuring about 2 1/2" x 1/2" x 1/8".

The Kasha Index (KI) of the copolyestercarbonate resin is determined. The Kasha Index is an indication or measure of the processability of the resin, i.e., the lower the KI the greater the melt flow rate of the resin and, therefore, the better the processability of the resin. Basically, the Kasha Index is a measurement of the melt viscosity of the resin. The procedure for determining the Kasha Index is as follows: 7 grams of resin pellets, dried a minimum of 90 minutes at 125°C., are added to a modified Tinius-Olsen model T3 melt indexer, the temperature in the indexer is maintained at 300°C. and the resin is heated at this temperature for 6 minutes, after 6 minutes the resin is forced through a 0.04125 inch radius orifice using a plunger of 0.1865 inches and an applied force of 17.7 lbs., the time required for the plunger to travel 2 inches is measured in centiseconds and this is reported as the KI. The higher the KI is, the higher the melt viscosity and the more viscous the resin. Thus a higher KI indicates a resin which is more difficult to process.

The Heat Distortion Temperature Under Load (DTUL) of the resin samples is determined according to modified ASTM D-648 test method. The samples are also checked for stress cracking or crazing by visual inspection after various heat treatments such as autoclaving and annealing.

The autoclaving was done at 110°C for 24, 48 or 72 hours. For annealing, Izod bars were heated at 140°C for 24 hours.

Impact of molded composition was checked under ASTM D256 for notched Izod bars of 1/8 inch and 1/4

inch thickness and results reported in ft.lbs/in. of notch. The compatibility of the composition was checked under ASTM D256 by measuring the impact strength of a 1/8 inch sample prepared by injection at two molding ports, thereby creating a weld line whose impact was tested (Double Gate - DG). Values are reported in ft.lbs. Also measured is the S-tensile impact of the appropriate bars following ASTM D1822. Values are reported in ft.lbs/in.$^2$. All observed impacts occurred in the brittle failure mode.

EXAMPLES 2-5

Compositions were prepared using various quantities of polyethylene terephthalate obtained from Goodyear and the copolyestercarbonate of Example 1. Even at 1 weight percent polyethylene terephthalate, the extrusion temperature of the admixture was reduced 16°C. in comparison with 100% copolyestercarbonate. All of the tested compositions also contained 0.03 weight percent of a phosphite and 0.2 weight percent of a silicone oil as additions. Below are the results of the test systems described in Example 1.

TABLE I

| EXAMPLE | WT.% PET | KI $x10^3$ | DTUL | NOTCHED IZOD 1/8 | NOTCHED IZOD 1/4 | DG | S-TENSIL |
|---|---|---|---|---|---|---|---|
| 1 | 0 | 40 | 163 | 6.0 | 6.0 | 32 | 210 |
| 2 | 1 | 37 | 158 | 6.3 | 5.5 | 28.9 | 195 |
| 3 | 10 | 17.8 | 149 | 6.7 | 5.5 | 31.2 | 145 |
| 4 | 30 | 9.9 | 135 | 8.7 | 2.3 | 25.6 | 155 |
| 5 | 45 | 4.4 | 87 | 2.1 | 1.4 | 26.8 | 97 |

The data in the Table clearly show the processing advantages obtained with the addition of appropriate quantities of a polyalkylene terephthalate to a copolyestercarbonate. The KI value is reduced substantially with increasing quantities of polyalkylene terephthalate. The measured impact values and DTUL retain their values to a substantial extent until about 45 wt. percent of polyalkylene terephthalate is present. The preferred quantities of polyalkylene terephthalate provide very good retention of the measured properties.

The molded parts were visually inspected for stress cracking following the aforedescribed test systems. All the parts from the 100% copolyestercarbonate resin have substantial stress cracks along the edge of the part. Even with quantities of 1 weight percent polyethylene terephthalate the molded parts had substantially less stress cracking or no stress cracking along the edges.

WHAT IS CLAIMED IS:

1. A thermoplastic molding composition exhibiting improved processability and resistance to stress cracking comprised of, in physical admixture,

(i) at least one copolyestercarbonate resin; and

(ii) an amount effective to improve the processability and stress cracking resistance of at least one polyalkylene terephthalate resin.

2. The composition of claim 1 wherein said amount is in the range of from about 1 to about 45 weight percent, based on the amount of copolyestercarbonate and polyalkylene terephthalate present.

3. The composition of claim 2 wherein said polyalkylene terephthalate is poly(ethylene terephthalate).

4. The composition of claim 3 which further includes impact modifiers.

5. The composition of claim 3 which further includes at least one flame retardant.

6. The composition of claim 3 wherein said copolyestercarbonate resin is derived from at least one dihydric phenol, a carbonate precursor, and at least one difunctional carboxylic acid or a reactive derivative thereof.

7. The composition of claim 6 wherein said carbonate precursor is phosgene.

8. The composition of claim 7 wherein said dihydric phenol is bishenol-A.

9. The composition of claim 8 wherein said difunctional carboxylic acid is selected from isophthalic acid, terephthalic acid, or ester forming reaction derivatives of isophthalic or terephthalic acid and mixtures thereof.